# EUROPEAN PATENT APPLICATION

(11) **EP 2 003 028 A2**
(43) Date of publication of application: **17.12.2008**
(21) Application number: 06743421.7
(22) Date of filing: 31.03.2006
(51) Int. Cl.: B60R 25/10, G08B 25/10, G08G 1/127

(54) **REDUNDANT DEVICE FOR LOCATING, TRACKING AND RECOVERING VEHICLES**

(71) Applicant: Detector de Seguimiento y Transmision, S.A., 28108 Alcobendas Madrid (ES)
(72) Inventor: BURT, Ian Alexander, 28108 Alcobendas (Madrid) (ES)
(74) Representative: Manzano Cantos, Gregorio
(86) International application number: PCT/ES2006/000159
(87) International publication number: WO 2007/113341

(57) **Abstract**

The invention relates to a redundant device for locating, tracking and recovering vehicles based on known VLU5 technology for recovering stolen or missing vehicles, or vehicles that have been involved in an accident, or the like, and which consists of DLU equipment that is the result of combining GSM technology with radio in a single hardware unit by means of the integration of the two technologies as redundant systems, thereby providing novel functionalities by means of using network tools available in mobile telephony technology.

## Description

### Object of the Invention

According to the title, the invention relates to a redundant device for locating, tracking and recovering stolen or missing vehicles, or vehicles that have been involved in an accident, and any other object which allows incorporating or installing said device, logically in a concealed or camouflaged manner, which has the particularity of being designed with a system for recovering vehicles based on the LoJack VLU5 technology.

The object of the invention is therefore a device designed by the inventors. It has DLU (Detector Location Unit) equipment as a key element, which is the result of combining GSM (Global Standard for Mobile communications) technology with radio in a single and unique hardware unit by means of the integration of the two technologies as redundant systems.

The object of the invention consists of designing redundant equipment which provides novel functionalities for managing commands by using the GSM network, complementing those functionalities already existing in the vehicle recovery process by means of using network tools available in mobile telephony technology.

The radio equipment in said system works as a transceiver receiving network commands or instructions by means of data messages transmitted from dedicated emitters in the exclusive frequency of the developer; this part of the equipment is called VLU (Vehicle Location Unit), and it is a known part designed and manufactured by LoJack which, when it receives the activation command through the network, transmits an alphanumeric code by way of a beacon.

### Background of the Invention

As has been previously pointed out, the basic system marketed by Lojack exists in the start of the art. This is a radio-beacon working in the VHF system. At the time it was decided that in order to be able to market this product a very extensive radio coverage (VHF) was needed and that it therefore needed to cover the entire designated territory for its control with radio antennas which would allow extending the signal in order to thus be able to offer the service of recovering stolen or missing vehicles, or vehicles that have been involved in an accident, or the like, in coordination with its own or public or private recovery equipment.

This system is object of patent US 2006/0007039, published January 12, 2006 and filed July 8, 2004 with serial number 10/886,870 in favor of Lojack Corp. for: " Method of and System for Expanding Localized Missing Customer-Vehicle Law Enforcement-aided VHF Recovery Networks with Location-on-demand Supplemental Service Features via such Networks for Improved Law Enforcement-aided Recovery and Via the Internet for Providing Supplemental Customer Service Features". It comprises a method which allows using the mobile telephony network, which is geographically quite extended, in order to complete the radio network points for recovering stolen vehicles which are more limited, activating the tracking by radio and recovering said vehicle, which includes equipping the vehicle both with a radio beacon or transponder emitting a constant and coded signal for responding with a unique reply transmission code to a query from the recovery network, and with a transmitter for responding with a unique identification transmission to the query from the mobile telephony network; upon confirming the theft of a vehicle in a control center, programming both the recovery network and the mobile telephony network to send their respective queries to the mentioned transponder and transmitter of the vehicle, receiving said unique identification transmission from the transmitter vehicle at a point of the mobile telephony network, and sending an identification number from said point to the control center so that the approximate information on the position of the stolen vehicle is available in the entire geographic network of the mobile telephony network; and receiving from the transponder, in the recovery vehicle, its reply transmission code for the purpose of allowing a detailed tracking of the stolen vehicle by the recovery vehicle.

### Description of the Invention

As a result of the foregoing, according to the invention, incorporating a GSM telephony module to the VHF radio product was considered, thus having two elements with redundancy capacity, which resulted in the design of a GSM capable of speaking and communicating with the VHF module, reducing the size of the two obtained systems in order to put all of them in a single case that withstands vibrations, the elements and other adversities and therefore preventing having to install two devices, joined by a cable through which they "speak", reducing it to a single device. The essential idea of the invention is the capacity of two technologies which have nothing in common to speak to one another.

The DLU according to the invention therefore extends this functionality by means of incorporating a second redundant communications layer based on a GSM cellular transceiver, being able to send to the VLU the same commands that are implemented in the radio network through the GSM mobile telephony network, extending the coverage and availability of the DLU. The GSM network commands implement all those commands of the radio network and extend them with specific messages which serve to ensure the security of the device.

The DLU of the invention is formed by two printed circuit wafers which are joined together by means of a connector and are preferably assembled overlapped in parallel, connecting the ports in series. Each of the circuits defines a network functionality, communication between them being necessary. The VLU (PCB radio) and the GNU (PCB GSM) (GSM Network Unit) use serial communication for passing commands received by one to the other and to that end they have put electronic signal adjustment elements in the GNU since the serial port of the VLU is not RS232 but rather CMOS 3.3 (CMOS Serial Communication based on Mosfet technology).

The DLU of the invention has an alternative security power supply system which ensures its availability when it is disconnected from the main power supply of the vehicle in which it is loaded.

The DLU of the invention is contained in an injected plastic case which meets IP66 environmental protection regulations for the purpose of ensuring its operation in non-leak-tight locations of the vehicles in which it can be installed.

This unit according to the invention has two autonomous microprocessors managing their own software independently from one another. Therefore there are two management controllers making sure that the unit is not blocked and ensuring the two communication channels at all times, thus a problem in one of the two units would be detected by the other one and would cause the equipment to reset. This further allows lowering the clock cycles to a minimum, minimizing consumption.

According to the invention the DLU is designed to achieve a high degree of blending with the installation environment inside cars. This is a security element and as such its correct operation is based on the fact that it cannot be easily disabled. To that end the case has been designed so that it is camouflaged like any other component of the car.

Due to the mere fact that the DLU as such according to the invention incorporates GSM provides the arrangement of the system with all the intrinsic functionalities of the technology itself. The most remarkable functionality is that of being able to determine the location of a registered device through the information of the network. This information is called cell information and the mobile telephony operator can provide it if requested and the necessary legal guarantees are given by the developer who logically uses this functionality to provide recovery groups, public forces or others with a very approximate location of the position of the device so that these groups can comb the area, specifically with goniometry technology, and recover the vehicle.

A broader idea of the features of the invention will be given below upon making reference to the sheets of drawings which are attached in this specification, schematically and only by way of example depicting the preferred and vital details of the patent.

### Description of the Drawings

Figure 1 is the schematic depiction of the DLU of the invention.
Figure 2, is a schematic depiction of the dual VHF/GSM(SMS) network command system in which the loaded DLU unit is implemented.

### Preferred Embodiment of the Invention

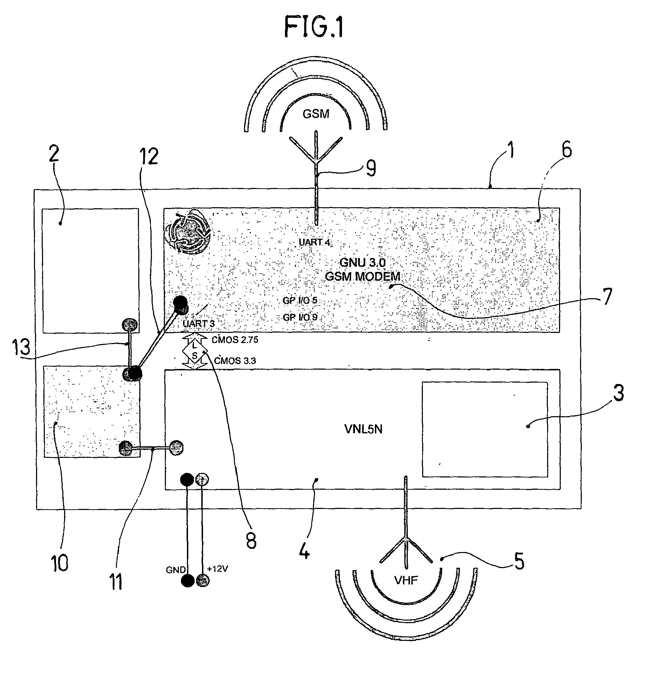

As described, a preferred embodiment would be formed by the loaded unit (1) of Figure 1, constructed as an IP66 approved plastic case resistant to the effects of aggression or adversity which can occur in the vehicle in which it is installed, camouflaged and fed by the battery thereof (2), along with an internal supplementary emergency battery (3), for example, an appropriate rechargeable lithium battery (3) provided for feeding the DLU and the corresponding GSM modem.

The loaded unit (1) which, with redundant technology, protects the VLU printed circuit wafers (4), which has the mentioned supplementary battery (3), and respective VHF antenna and the corresponding DLU printed circuit wafer (6) incorporating the respective GSM modem (7) and antenna (9); both printed circuit wafers (4) and (6) are joined together by a suitable connector (8) connecting the ports in series with a parallel assembly, overlapping one another, in order to respectively connect to the power supply source (10) by means of connections (11) to the VLU and connections (12) to the DLU with an extension to the battery (2) of the vehicle.

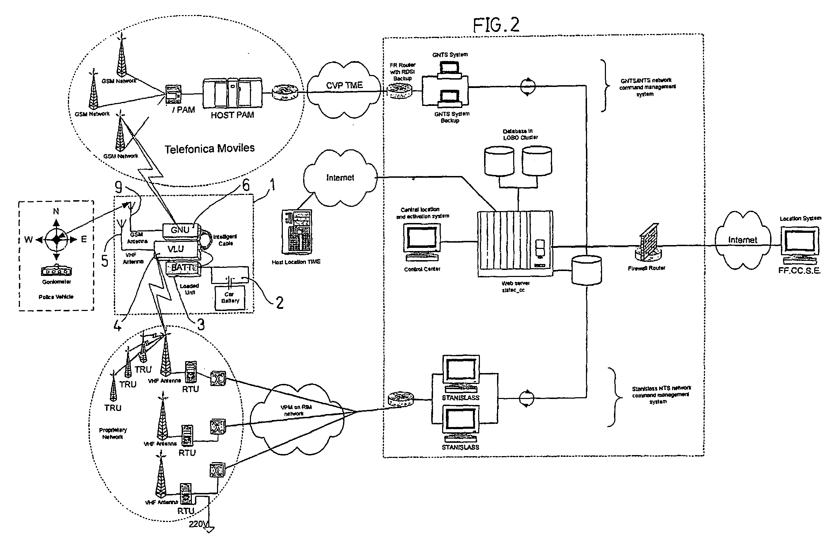

In the diagram of figure 2, it is seen how the loaded unit (1) of the invention redundantly associates VHF (4) and GSM (6) technologies handled though a dual command system in which the first is managed by a Stanislass NTS network command system and the second is managed by a GNTS/INTS network command system.

Having sufficiently described the nature of the invention, it is stated for all intents and purposes that such invention is not limited to the exact details of this description, but rather on the contrary, modifications which are considered appropriate can be introduced therein provided they to do not alter the essential features thereof, which are claimed below.

## Claims

1. A redundant device for locating, tracking and recovering vehicles, based on known VLU5 technology for recovering vehicles, **characterized in that** it comprises:
DLU equipment (1) that is the result of combining GSM technology (6) with radio (4) in a single hardware unit, by means of the integration of the two technologies as redundant systems, providing novel functionalities by means of using the network tools available in mobile telephony technology.

2. The redundant device for locating, tracking and recovering vehicles, wherein the DLU equipment according to the previous claim is **characterized in that** it extends this functionality by means of incorporating a second redundant communications layer based on a GSM cellular transceiver (7), being able to send the same commands which are implemented in the radio network through the GSM mobile telephony network, extending the coverage and availability of the DLU (1), whereas the GSM network commands implement all those commands of the radio network and extend them with specific messages which serve to ensure the security of the device.

3. The redundant device for locating, tracking and recovering vehicles, wherein the DLU equipment according to claim 2 is **characterized in that** it is formed by two printed circuits (4) and (6) which are joined to one another by means of a connector (8) connecting the ports in series, each circuit of which defines a network functionality such that there is communication between them; the VLU (4) (PCB radio) and the GNU (6) (PCB SMS) by means of serial communication (8) for passing commands received by one to the other and to that end consists of electronic signal adjustment elements in GNU(6) for the CMOS 3.3 serial port (8) of the VLU (4).

4. The redundant device for locating, tracking and recovering vehicles, wherein the DLU equipment according to claim 1 is **characterized in that** it has an alternative security power supply system (3).

5. The redundant device for locating, tracking and recovering vehicles, wherein the DLU equipment according to claim 1 is **characterized in that** it is contained in an injected plastic case which meets IP66 environmental protection regulations, ensuring its operation in non-leaktight and camouflaged locations like any other component of the vehicle.

6. The redundant device for locating, tracking and recovering vehicles, wherein the DLU equipment according to claims 2 and 3 is **characterized in that** it has two autonomous microprocessors managing their own software independently from one another, being formed in two management controllers, making sure that the unit is not blocked and ensuring the two communication channels; a reset of the equipment in the event that one piece of equipment has problems and lowering the clock cycles to a minimum.
